# EUROPEAN PATENT SPECIFICATION

(11) **EP 3 637 915 B1**
(45) Date of publication and mention of the grant of the patent: **27.08.2025**
(21) Application number: 18818128.3
(22) Date of filing: 15.06.2018
(51) Int. Cl.: H04W 72/04, H04L 5/00

(54) **MESSAGE SENDING METHOD AND DEVICE**
NACHRICHTENSENDEVERFAHREN UND -VORRICHTUNG
PROCÉDÉ ET DISPOSITIF D'ENVOI DE MESSAGE

(30) Priority: 15.06.2017 CN 201710454101
(43) Date of publication of application: 15.04.2020
(73) Proprietor: Huawei Technologies Co., Ltd., Longgang District Shenzhen, Guangdong 518129 (CN)
(72) Inventor: LIU, Zhe, Shenzhen Guangdong 518129 (CN); ZHANG, Xingwei, Shenzhen Guangdong 518129 (CN); FENG, Shulan, Shenzhen Guangdong 518129 (CN)
(74) Representative: Maiwald GmbH
(86) International application number: PCT/CN2018/091399
(87) International publication number: WO 2018/228512

(56) References cited:
- WO-A1-2013/023681
- CN-A- 102 118 866
- CN-A- 103 875 294
- CN-A- 104 754 763
- CN-A- 106 488 563
- CN-A- 106 686 728
- HUAWEI ET AL: "Discussion on uplink control channel design in NR", vol. RAN WG1, no. Lisbon, Portugal; 20161010 - 20161014, 1 October 2016 (2016-10-01), XP051159167, Retrieved from the Internet <URL:http://www.3gpp.org/ftp/tsg_ran/WG1_RL1/TSGR1_86b/Docs/> [retrieved on 20161001]
- LENOVO: "Frame structure design for new radio interface", vol. RAN WG1, no. Nanjing, China; 20160523 - 20160527, 13 May 2016 (2016-05-13), XP051096868, Retrieved from the Internet <URL:http://www.3gpp.org/ftp/tsg_ran/WG1_RL1/TSGR1_85/Docs/> [retrieved on 20160513]

## Description

### TECHNICAL FIELD

This application relates to the field of mobile communications, and in particular, to a message sending method and apparatus.

### BACKGROUND

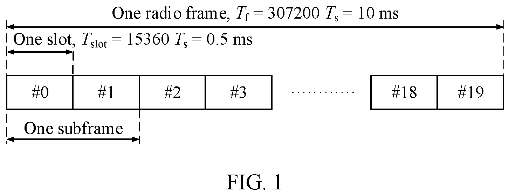

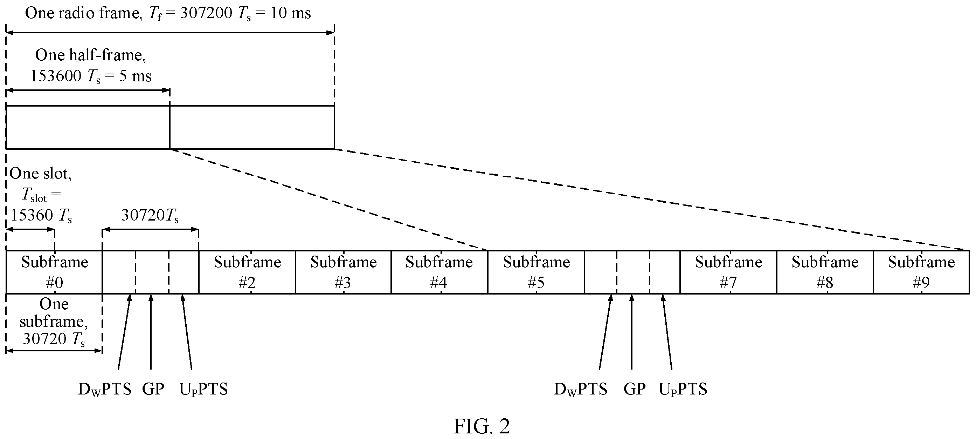

In an LTE network, a signal is transmitted in a unit of a radio frame (radio frame). In time domain, uplink and downlink signals are transmitted in a system frame structure. Each system frame is 10 ms, works on 15 kHz subcarriers having a same length, and works by using subframes having a same length and slots having a same length. The LTE network supports two frame structures: an FDD frame structure type used for frequency division duplex (frequency division duplexing, FDD) and a TDD frame structure type used for time division duplex (time division duplexing, TDD). In an example, as shown in FIG. 1, an FDD frame structure includes 10 subframes, a length of each subframe is 1 ms, each subframe includes two consecutive slots, and numbers of slots in a system frame are 0 to 19. For FDD, uplink transmission and downlink transmission are distinguished by using frequency domain. In every 10 ms, there are 10 subframes available for uplink transmission and 10 subframes available for downlink transmission. Each conventional transmission time interval (transmission time interval, TTI) is 1 ms, and is equal to a length of a subframe. A TDD system is similar to an FDD system in terms of frequency domain, and a 15 kHz subcarrier is used as an interval to modulate data. However, in terms of time domain, the TDD system shares one carrier, and an uplink subframe and a downlink subframe are distinguished in time. As shown in FIG. 2, a radio frame of 10 ms may include 10 subframes, and the 10 subframes have different TDD configurations. Some subframes are downlink subframes used for sending downlink data, and some subframes are uplink subframes used for sending uplink data. In addition, some special subframes that have a downlink transmission part and an uplink transmission part are further included.

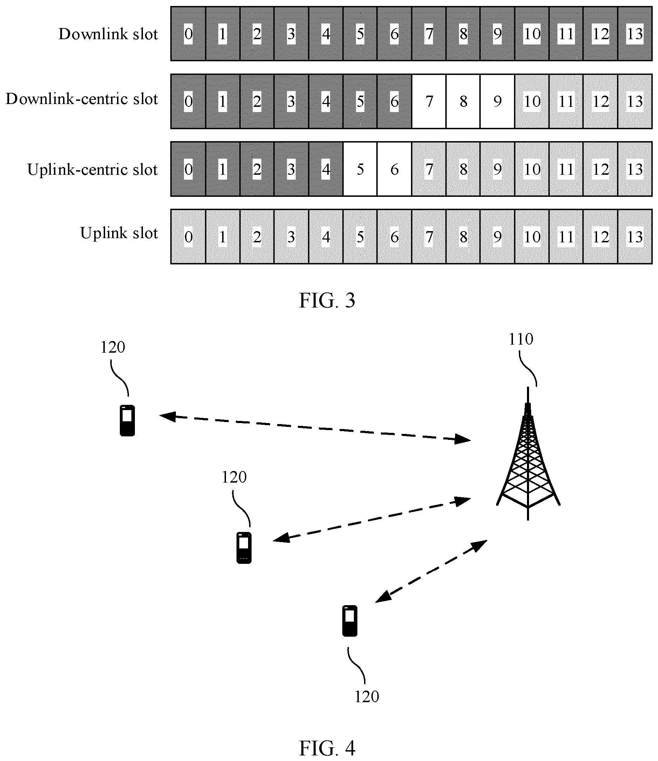

In a 5G new radio (new radio, NR) network, a plurality of types of subcarrier spacings are introduced. A baseline is 15 kHz, and the subcarrier spacing may be 15 kHz x 2n, where n is an integer. The subcarrier spacings are 3.75 kHz, 7.5 kHz, ..., and 480 kHz, and there are eight types of subcarrier spacings at most. Correspondingly, there are a plurality of types of symbol lengths and subframe lengths. In addition, to meet requirements of more types of services in the future, a plurality of slot types are supported in a 5G NR system, and the slot types may change dynamically. One slot may include at least one of downlink transmission, a guard period (guard period, GP), uplink transmission, and the like. In this way, composition of the slot includes at least the following several types: a downlink slot (DL only slot), a downlink-centric slot (DL centric slot), an uplink-centric slot (UL centric slot), an uplink slot (UL only slot), and the like. FIG. 3 is a schematic diagram of different slot types (also referred to as slot composition) in a 5G NR system. A normal cyclic prefix (normal cyclic prefix, normal CP) and 14 OFDM symbols are used as an example. There may be another combination in addition to possible different slot types shown in FIG. 3. Quantities of uplink symbols/quantities of downlink symbols/quantities of guard period symbols included in different slot types may be different.

In addition to differences in composition, quantities of symbols in the different slot types may also be different. In an example, a mini-slot (mini slot) includes fewer than seven symbols (for example, one symbol, two symbols, or four symbols), and a common slot (slot) includes seven symbols or 14 symbols.

In the 5G NR system, there are many messages that need to be sent periodically, including: a scheduling request (scheduling request, SR), periodic channel state information (periodic channel-state information, P-CSI), semi-persistent channel state information (semi-persistent channel-state information, semi-persistent CSI), beam reporting (beam reporting), periodic sounding reference signal (periodic sounding reference signal, periodic SRS), channel state information reference signal (channel-state information reference signal, CSI-RS), channel state information interference measurement (channel-state information interference measurement, CSI-IM), and the like. In addition, an aperiodic message having a specific timing relationship includes: aperiodic channel state information (CSI), aperiodic sounding reference signal (SRS), an acknowledgement instruction (acknowledgement, ACK)/a negative acknowledgement instruction (negative acknowledgement, NACK), and the like. When a sending time arrives, if a slot type changes dynamically, a periodic message or an aperiodic message may fail to be sent.

Huawei et al: "Discussion on uplink control channel design in NR", 3GPP draft; R1-1608840, vol. RAN WG1, 01.10.2016, XP051159167 describes a mechanism to enable flexible time and frequency resource for uplink control channel transmission indicating the symbols for uplink control channel transmission by DCI.

### SUMMARY

To resolve a problem that a periodic message or an aperiodic message may fail to be sent when a type of a time unit changes dynamically, this application describes a message sending method and apparatus. The present application is defined in the appended independent claims. Further implementations are disclosed in the pending dependent claims. In the following, implementations not falling within the scope of the claims are to be understood as examples useful for understanding the application.

Herein, in an example, a time unit may include at least one of downlink transmission, a guard period, uplink transmission, and the like. In this way, composition of the time unit includes at least the following several types: a downlink time unit, a downlink-centric time unit, an uplink-centric time unit, an uplink time unit, and the like. Quantities of uplink symbols/quantities of downlink symbols/quantities of guard period symbols included in different types of time units may be different. In addition to differences in composition, quantities of symbols in the different types of time units may also be different. In an example, a mini time unit includes fewer than seven symbols (for example, one symbol, two symbols, or four symbols), and a common time unit includes seven symbols or 14 symbols.

According to a first aspect, an embodiment of this application provides a message sending method, and the method is applied to a first device. The method includes: determining, based on a first configuration of a first message, a first time unit for sending the first message; determining whether a resource capable of carrying the first message exists in the first time unit; when the resource capable of carrying the first message does not exist in the first time unit, determining at least one second time unit for sending the first message, where the resource capable of carrying the first message exists in each second time unit; and sending the first message to a second device in the at least one second time unit.

In a possible implementation of the first aspect, the determining at least one second time unit for sending the first message includes: determining at least one candidate time unit based on a second configuration; and determining the at least one second time unit from the at least one candidate time unit.

In a possible implementation of the first aspect, the determining at least one second time unit for sending the first message includes: determining the at least one second time unit according to a first rule.

In a possible implementation of the first aspect, the determining the at least one second time unit from the at least one candidate time unit includes: determining the at least one second time unit from the at least one candidate time unit according to a first rule.

In a possible implementation of the first aspect, the first rule includes: determining the at least one second time unit starting from a time unit closest to the first time unit.

In a possible implementation of the first aspect, the first rule includes: determining the at least one second time unit starting from a time unit located in front among the second time units in time domain.

In a possible implementation of the first aspect, the first rule includes that a time interval between each second time unit and a current time is greater than or equal to a first threshold, where the first threshold is determined based on a device capability of the first device.

In a possible implementation of the first aspect, the first rule includes that a time interval between each second time unit and a current time is less than or equal to a second threshold, where the second threshold is determined based on a delay of the first message.

In a possible implementation of the first aspect, the first rule includes that each second time unit is located after the first time unit.

In a possible implementation of the first aspect, the first rule is determined based on the second configuration of the first message, or the first rule is predefined.

In a possible implementation of the first aspect, the sending the first message to a second device in the at least one second time unit includes: when the at least one second time unit exists, sending the first message to the second device in the at least one second time unit.

In a possible implementation of the first aspect, the method further includes: discarding the first message when the at least one second time unit does not exist.

In a possible implementation of the first aspect, the method further includes: when the resource capable of carrying the first message exists in the first time unit, sending the first message to the second device in the first time unit.

In a possible implementation of the first aspect, granularities of the time units are one type of the following: a frame, a subframe, a slot, a mini-slot, a symbol, a TTI, and a millisecond.

In a possible implementation of the first aspect, the sending the first message to a second device in the at least one second time unit includes: segmenting the first message when the at least one second time unit is at least two second time units; and sending a segmented first message to the second device in each of the at least two second time units.

In a possible implementation of the first aspect, the sending the first message to a second device in the at least one second time unit includes: when the at least one second time unit is at least two second time units, sending the first message to the second device in each of the at least two second time units.

In the foregoing solution provided in this application, when a time unit originally for sending the first message cannot carry the message, a time unit capable of carrying the message is reselected. In this way, a probability that the message can still be sent increases when a type of the time unit changes dynamically.

To resolve a problem that a periodic message or an aperiodic message may fail to be sent when a type of a time unit changes dynamically, this application describes another message sending method and apparatus.

According to a second aspect, an embodiment of this application provides a message sending method, including: determining a first time window based on a third configuration of a first message; determining whether at least one first time unit exists in the first time window, where a resource capable of carrying the first message exists in each first time unit; and when the at least one first time unit exists in the first time window, sending the first message to a second device in one or more of the at least one first time unit.

In a possible implementation of the second aspect, when the at least one first time unit includes at least two first time units, and when the one or more first time units are one first time unit, the first time unit is one of a first time unit that is in the at least two first time units and that is closest to a start location of the first time window, a first time unit that is in the at least two first time units and that is closest to an end location of the first time window, or a first time unit that is in the at least two first time units and that is closest to a central location of the first time window.

In a possible implementation of the second aspect, the sending the first message to a second device in one or more of the at least one first time unit includes: segmenting the first message when the at least one first time unit includes at least two first time units, and when the one or more first time units are two or more first time units; and sending a segmented first message to the second device in each of the two or more first time units.

In a possible implementation of the second aspect, the sending the first message to a second device in one or more of the at least one first time unit includes: when the at least one first time unit includes at least two first time units, and when the one or more first time units are two or more first time units, sending the first message to the second device in each of the two or more first time units.

In a possible implementation of the second aspect, the method further includes: discarding the first message when the at least one first time unit does not exist in the first time window.

In a possible implementation of the second aspect, granularities of the time window and the time unit are one type of the following: a frame, a subframe, a slot, a mini-slot, a symbol, a TTI, and a millisecond.

In the foregoing solution provided in this application, time units located in a specific time range (a time window) are used as alternatives of time units for sending the first message. In this case, as long as one of the time units used as alternatives is capable of carrying the message, the message can be sent. In this way, a probability that the message can still be sent increases when a type of the time unit changes dynamically.

To resolve a problem that a periodic message or an aperiodic message may fail to be sent when a type of a time unit changes dynamically, this application describes another message sending method and apparatus.

According to a third aspect, an embodiment of this application provides a message sending method, including: determining at least one candidate time unit based on a first configuration of a first message; determining whether at least one first time unit exists in the at least one candidate time unit, where a resource capable of carrying the first message exists in each first time unit; and when the at least one first time unit exists in the at least one candidate time unit, sending the first message to a second device in one or more of the at least one first time unit.

In a possible implementation of the third aspect, the sending the first message to a second device in one or more of the at least one first time unit includes: segmenting the first message when the at least one first time unit includes at least two first time units, and when the one or more first time units are two or more first time units; and sending a segmented first message to the second device in each of the at least two first time units.

In a possible implementation of the third aspect, the sending the first message to a second device in one or more of the at least one first time unit includes: when the at least one first time unit includes at least two first time units, and when the one or more first time units are two or more first time units, sending the first message to the second device in each of the at least two first time units.

In a possible implementation of the third aspect, the method further includes: discarding the first message when the at least one first time unit does not exist in the at least one candidate time unit.

In a possible implementation of the third aspect, granularities of the time units are one type of the following: a frame, a subframe, a slot, a mini-slot, a symbol, a TTI, and a millisecond.

In the foregoing solution provided in this application, a plurality of time units are used as alternatives of time units for sending the first message. In this case, as long as one of the time units used as alternatives is capable of carrying the message, the message can be sent. In this way, a probability that the message can still be sent increases when a type of the time units changes dynamically.

To resolve a problem that a periodic message or an aperiodic message may fail to be sent when a type of a time unit changes dynamically, this application describes another message sending method and apparatus.

According to a fourth aspect, an embodiment of this application provides a message sending method, including: determining, based on a first configuration of a first message, a first resource for sending the first message; determining whether a resource capable of carrying the first message exists in the first resource; when the resource capable of carrying the first message does not exist in the first resource, determining at least one second resource for sending the first message, where the resource capable of carrying the first message exists in each second resource; and sending the first message to a second device in the at least one second resource.

In a possible implementation of the fourth aspect, the first resource and the second resource include resources in at least one of time domain, frequency domain, space domain resource, and code domain.

In a possible implementation of the fourth aspect, the method further includes: when the resource capable of carrying the first message exists in the first resource, sending the first message to a second device on the first resource.

In a possible implementation of the fourth aspect, granularities of the first resource and the second resource in the time domain are one type of the following: a frame, a subframe, a slot, a mini-slot, a symbol, a TTI, and a millisecond.

In the foregoing solution provided in this application, when a time-frequency resource originally used for sending the first message cannot carry the message, a time unit capable of carrying the time-frequency resource is reselected. In this way, a probability that the message can still be sent increases when a type of the time-frequency resource changes dynamically.

This application describes another message sending method and apparatus.

According to a fifth aspect, an embodiment of this application provides a message sending method, including: determining, based on a first configuration of a first message, a first time unit for sending the first message, where a channel sent in the first time unit includes at least two PUCCHs; and sending the first message on at least one of the at least two PUCCHs.

In a possible implementation of the fifth aspect, the at least two PUCCHs include a short PUCCH and a long PUCCH, and the sending the first message on at least one of the at least two PUCCHs includes: when a resource capable of carrying the first message exists in the short PUCCH, sending the first message to a second device on a PUCCH that is located before another PUCCH and that is in the at least two PUCCHs; or sending the first message to a second device on the long PUCCH when the resource capable of carrying the first message does not exist in the short PUCCH, and the resource capable of carrying the first message exists in the long PUCCH.

In a possible implementation of the fifth aspect, the sending the first message on at least one of the at least two PUCCHs includes: segmenting the first message when the at least one PUCCH includes two or more PUCCHs; and sending a segmented first message to the second device on each of the two or more PUCCHs.

In a possible implementation of the fifth aspect, the sending a segmented first message to the second device on each of the two or more PUCCHs includes: sending a segmented first message having a higher delay requirement on a PUCCH that is located before another PUCCH and that is in the two or more PUCCHs; and sending a segmented first message having a lower delay requirement on a PUCCH that is located after another PUCCH and that is in the two or more PUCCHs.

In a possible implementation of the fifth aspect, the at least two PUCCHs include a short PUCCH and a long PUCCH, and the sending a segmented first message to the second device on each of the two or more PUCCHs includes: sending a segmented first message having a smaller quantity of bits on the short PUCCH; and sending a segmented first message having a larger quantity of bits on the long PUCCH.

In a possible implementation of the fifth aspect, granularities of the time units are one type of the following: a frame, a subframe, a slot, a mini-slot, a symbol, a TTI, and a millisecond.

According to a sixth aspect, an embodiment of this application provides a message sending apparatus. The apparatus may be a first device (a network device or a terminal device), or may be a chip in the first device. The apparatus may include a processing unit and a transceiver unit. When the apparatus is the first device, the processing unit may be a processor, and the transceiver unit may be a transceiver. The first device may further include a storage unit, and the storage unit may be a memory. The storage unit is configured to store an instruction, and the processing unit executes the instruction stored in the storage unit, to enable the first device to perform the method according to the first aspect or any possible implementation of the first aspect, the method according to the second aspect or any possible implementation of the second aspect, the method according to the third aspect or any possible implementation of the third aspect, the method according to the fourth aspect or any possible implementation of the fourth aspect, or the method according to the fifth aspect or any possible implementation of the fifth aspect. When the apparatus is the chip in the first device, the processing unit may be a processor, and the transceiver unit may be an input/output interface, a pin, a circuit, or the like. The processing unit executes an instruction stored in a storage unit, to enable the first device to perform the method according to the first aspect or any possible implementation of the first aspect, the method according to the second aspect or any possible implementation of the second aspect, the method according to the third aspect or any one possible implementation of the third aspect, the method according to the fourth aspect or any possible implementation of the fourth aspect, or the method according to the fifth aspect or any possible implementation of the fifth aspect. The storage unit may be a storage unit (for example, a register or a cache) in the chip, or may be a storage unit (for example, a read-only memory or a random access memory) that is located outside the chip and that is in the first device.

According to a seventh aspect, an embodiment of this application provides a communications system, and the communications system includes the network device and the terminal device in the sixth aspect.

According to an eighth aspect, an embodiment of this application provides a computer-readable storage medium configured to store a computer program. The computer program is used to execute an instruction of the method according to the first aspect, the second aspect, any possible implementation of the first aspect, or any possible implementation of the second aspect.

According to a ninth aspect, a chip system is provided, including a memory and a processor. The memory is configured to store a computer program, and the processor is configured to invoke the computer program from the memory and run the computer program, to enable a communications device installed with the chip system to perform the method according to the first aspect, the second aspect, any possible implementation of the first aspect, or any possible implementation of the second aspect.

According to a tenth aspect, a computer program product is provided. The computer program product includes computer program code, and when the computer program code is run by a communications unit and a processing unit, or a transceiver and a processor, of a communications device (for example, a terminal device or a network device), the communications device is enabled to perform the method according to the first aspect, the second aspect, any possible implementation of the first aspect, or any possible implementation of the second aspect.

### BRIEF DESCRIPTION OF DRAWINGS

FIG. 1 is a schematic diagram of an FDD frame structure;
FIG. 2 is a schematic diagram of a TDD frame structure;
FIG. 3 is a schematic diagram of a slot type in a 5G NR system;
FIG. 4 is a schematic diagram of a network architecture to which an embodiment of this application is applied;
FIG. 5 is a flowchart of a first embodiment of a message sending method according to this application;
FIG. 6 is a framework diagram of a first embodiment of a first device according to this application;
FIG. 7 is a structural diagram of a first embodiment of a first device according to this application;
FIG. 8 is a flowchart of a second embodiment of a message sending method according to this application;
FIG. 9 is a framework diagram of a second embodiment of a first device according to this application;
FIG. 10 is a structural diagram of a second embodiment of a first device according to this application;
FIG. 11 is a flowchart of a third embodiment of a message sending method according to this application;
FIG. 12 is a framework diagram of a third embodiment of a first device according to this application;
FIG. 13 is a structural diagram of a third embodiment of a first device according to this application;
FIG. 14 is a flowchart of a fourth embodiment of a message sending method according to this application;
FIG. 15 is a framework diagram of a fourth embodiment of a first device according to this application;
FIG. 16 is a structural diagram of a fourth embodiment of a first device according to this application;
FIG. 17 is a flowchart of a fifth embodiment of a message sending method according to this application;
FIG. 18 is a framework diagram of a fifth embodiment of a first device according to this application; and
FIG. 19 is a structural diagram of a fifth embodiment of a first device according to this application.

### DESCRIPTION OF EMBODIMENTS

The following describes technical solutions in the embodiments of this application with reference to the accompanying drawings.

FIG. 4 shows a communications system 100 to which an embodiment of this application is applied. The communications system 100 may include at least one network device 110 and a plurality of terminal devices 120 located in a coverage area of the network device 110. FIG. 4 shows one network device and three terminal devices. Optionally, the communications system 100 may include a plurality of network devices, and another quantity of terminal devices may be included in a coverage area of each network device. This is not limited in this embodiment of this application.

Optionally, the wireless communications system 100 may further include another network entity. This is not limited in this embodiment of this application.

The communications system to which this embodiment of this application is applied may be a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a 5G NR system, another wireless communications system that uses an orthogonal frequency division multiplexing (orthogonal frequency division multiplexing, OFDM) technology, or the like.

The network device mentioned in this embodiment of this application may be configured to provide a wireless communication function for a terminal device. The network device may include various forms of a macro network device, a micro network device (also referred to as a small cell), a relay node, an access point, and the like. The network device may be a network device transceiver station (base transceiver station, BTS) in GSM or CDMA, or may be a network device (NodeB, NB) in WCDMA, or may be an evolved network device (Evolutional NodeB, eNB or e-NodeB) in LTE, or may be a corresponding device gNB in a 5G network. For ease of description, in all the embodiments of this application, the foregoing apparatuses that provide the wireless communication function for the terminal device are collectively referred to as the network device.

The terminal device mentioned in this embodiment of this application is also referred to as user equipment (user equipment, UE), a mobile station (mobile station, MS), a mobile terminal device (mobile terminal), or the like. The terminal device may communicate with one or more core networks through a radio access network (radio access network, RAN). For example, the terminal device may be a mobile phone (also referred to as a "cellular" phone) or a computer with a mobile terminal device. For example, the terminal device may alternatively be a portable, pocket-sized, handheld, computer built-in, or in-vehicle mobile apparatus, and exchanges voice and/or data with the radio access network. This is not limited in this embodiment of this application.

A network architecture and a service scenario described in this embodiment of this application are intended to describe the technical solutions in the embodiments of this application more clearly, but constitute no limitation on the technical solutions provided in the embodiments of this application. A person of ordinary skill in the art may learn that the technical solutions provided in the embodiments of this application are also applicable to a similar technical problem as the network architecture evolves and a new service scenario emerges.

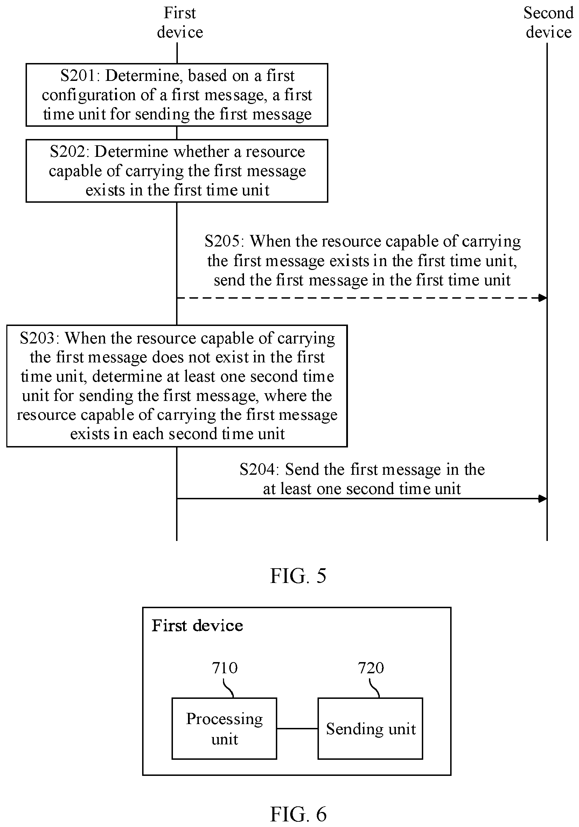

FIG. 5 shows an embodiment of a message sending method according to this application, and the method includes S201, S202, S203, and S204.

S201: A first device determines, based on a first configuration of a first message, a first time unit for sending the first message.

Herein, the first configuration of the first message is information used to determine a sending time of the first message. The first message may be a periodic message or may be an aperiodic message. For the periodic message, the first configuration is a parameter configured by a higher layer. The first device determines a period and an offset based on the parameter, and the first device determines a series of sending times of the periodic message based on the first configuration. The first time unit is one of the series of sending times. For the aperiodic message, the first configuration is a fixed timing relationship sent by using physical layer signaling, and the first device determines a sending time of the aperiodic message based on the first configuration.

S202: The first device determines whether a resource capable of carrying the first message exists in the first time unit.

Herein, the first device may perform the foregoing determining when the first time unit arrives, or may perform the foregoing determining when learning that a type of the first time unit changes.

S203: When the resource capable of carrying the first message does not exist in the first time unit, the first device determines at least one second time unit for sending the first message, where the resource capable of carrying the first message exists in each second time unit.

Optionally, in S203, the first device determines at least one candidate time unit based on a second configuration, and determines the at least one second time unit from the at least one candidate time unit.

Herein, for the periodic message, the second configuration is a new parameter configured by the higher layer or is physical layer signaling/higher layer signaling. For example, the physical layer signaling or the higher layer signaling may be downlink control information (downlink control information, DCI) or radio resource control (Radio Resource Control, RRC) signaling, and the physical layer or the higher layer signaling indicates a new sending location or a new sending rule. For example, the second configuration may be a parameter re-sent by using the higher layer signaling, and a new period and a new offset may be obtained based on the parameter, so as to determine a second time unit. The second time unit may be located in the first time unit. Alternatively, the second configuration may be a new sending rule sent by using the physical layer signaling. For example, the first message is sent in a second time unit closest to the first time unit. For the aperiodic message, the second configuration is a new location or a new sending rule indicated by using the physical layer signaling (for example, the DCI).

Herein, the second configuration indicates at least one time unit used as an alternative. The first device may send the first message to a second device in all time units in these time units, or may select some time units (some herein means one or more) from the time units to send the first message to a second device.

Optionally, the first device determines the at least one second time unit from the at least one candidate time unit according to a first rule.

To be specific, the processing of selecting some time units from the time units as alternatives may be performed according to the first rule.

Optionally, in S203, the first device determines the at least one second time unit according to a first rule.

Herein, when the second configuration and the first rule coexist, the first device may select one of the second configuration and the first rule as a basis for determining the at least one second time unit, or may determine the at least one second time unit based on the second configuration and according to the first rule. In an example, when a conflict exists between the second configuration and the first rule, a priority of the second configuration is higher than a priority of the first rule. For example, when all time units determined based on the second configuration are time units located before the first time unit. However, when the first rule is that the second time unit is located after the first time unit, the second configuration is used as a basis. The first time unit is still selected from the time units determined based on the second configuration.

Optionally, the first rule includes that a time interval between each second time unit and a current time is greater than or equal to a first threshold, where the first threshold is determined based on a device capability of the first device.

To be specific, the first device selects a time unit capable of carrying the first message from time units that have time intervals greater than or equal to the first threshold with a current time.

Herein, the device capability is a capability of preparing for message sending by the first device. The first threshold is a minimum preparation time capable of sending the first message. If the device capability is less than the first threshold, the message cannot be sent because preparation is not completed.

When a re-determined sending time arrives, the first message cannot be sent if sending preparation of the first message is not completed. In this way, it can be ensured that the sending preparation of the first message is completed when the re-determined sending time arrives.

Optionally, the first rule includes that a time interval between each second time unit and a current time is less than or equal to a second threshold, where the second threshold is determined based on a delay of the first message.

To be specific, when it is determined whether the resource capable of carrying the first message exists in a time unit, the first device needs to determine whether a time interval between the time unit and a current time exceeds the second threshold. If the time interval exceeds the second threshold, determining does not need to be performed for a subsequent time unit.

Herein, the delay is a maximum transmission delay of sending a message. If the delay is greater than the threshold, a transmission delay of the message is too large.

In this way, it can be ensured that a delay of arrival of the first message at a peer end is not excessively large.

Optionally, the first rule includes that the first device determines the at least one second time unit starting from a time unit closest to the first time unit.

To be specific, the first device performs determining starting from a time unit closest to the first time unit, whether the resource capable of carrying the first message exists in the time unit. Herein, on a basis that another condition (the second configuration or another first rule) in time domain is satisfied, it is considered that the determining should be performed starting from which time unit. To be specific, the first device determines, starting from a time unit closest to the first time unit in time units that satisfy the another condition in time domain, whether the resource capable of carrying the first message exists in the time unit. For example, when the second configuration indicates a plurality of time units, the first device may select, in the plurality of time units, a time unit closest to the first time unit to start determining. If the resource capable of carrying the first message exists in the closest time unit, the closest time unit is used as the second time unit. If the resource capable of carrying the first message does not exist in the closest time unit, a time unit second closest to the first time unit in the plurality of time units is selected for determining. When there is no another condition that needs to be satisfied in time domain, the first device may perform determining starting from a time unit closest to the first time unit, for example, a time unit located before the first time unit or a time unit located after the first time unit.

In this way, a difference between the re-determined sending time of the first message and an original sending time of the first message can be relatively small, thereby better ensuring effectiveness of the first message.

Optionally, the first rule includes that the first device selects a time unit capable of carrying the first message from time units located in front among the second time units in time domain.

Herein, on a basis that another condition (the second configuration or another first rule) in time domain is satisfied, it is considered that the determining should be performed starting from which time unit. To be specific, the first device determines, starting from a time unit that is located in front among time units that satisfy the another condition in time domain, whether the resource capable of carrying the first message exists in the time unit. For example, when a predetermined rule further includes that a time interval between each second time unit and a current time is greater than or equal to a first threshold, the first device may select, from time units that have time intervals greater than or equal to the first threshold with a current time, a time unit (namely, a time unit that has a time interval equal to the first threshold with the current time) located in front among the time units to start determining. If the resource capable of carrying the first message exists in the time unit, the time unit is used as the second time unit. If the resource capable of carrying the first message does not exist in the time unit, a time unit located after the time unit is selected for determining. When there is no another condition that needs to be satisfied in time domain, the first device may perform determining starting from a time unit located after the current time.

In this way, the re-determined sending time of the first message can be as early as possible.

Optionally, the first rule includes that each second time unit is located after the first time unit.

To be specific, the first device determines, starting from a time unit located after the first time unit, that the time unit capable of carrying the first message exists.

Optionally, the first rule is determined based on the second configuration of the first message, or the first rule is predefined.

S204: The first device sends the first message to a second device in the at least one second time unit.

Optionally, in S204, when the at least one second time unit exists, the first device sends the first message to the second device in the at least one second time unit.

Optionally, when the at least one second time unit does not exist, the first device discards the first message.

Optionally, in S204, when the at least one second time unit is at least two second time units, the first device segments the first message, and sends a segmented first message to the second device in each of the at least two second time units.

Optionally, in S204, when the at least one second time unit is at least two second time units, the first device sends the first message to the second device in each of the at least two second time units.

Optionally, this embodiment further includes S205.

S205: When the resource capable of carrying the first message exists in the first time unit, the first device sends the first message to the second device in the first time unit.

For example, when the first message is the aperiodic message, the first time unit may include a plurality of (the plurality of herein means two or more) time units, and the first device may send the first message to the second device in these time units, or may select some (some herein means one or more) of the time units to send the first message to the second device.

Optionally, in this embodiment, granularities of the time units are one type of the following: a frame, a subframe, a slot (slot), a mini-slot (mini-slot), a symbol, a TTI, and a millisecond.

Herein, an advantage of selecting the granularity (a relative time) such as the frame, the subframe, the slot, the mini-slot, the symbol, or the TTI is to indicate a reported location more intuitively. An advantage of selecting the granularity (an absolute time) such as the millisecond is to avoid a problem that an indicated time unit is inconsistent with a changed time unit and that is caused by a change in a TTI length due to a change in a subcarrier spacing (subcarrier spacing, SCS).

Each granularity used as a configuration parameter is configurable, and may be configured by using physical layer or higher layer signaling (for example, downlink control information (downlink control information, DCI) or radio resource control (radio resource control, RRC) signaling). Alternatively, a protocol specifies a default time unit. If configuration signaling is not received, a reporting time is calculated based on the default time unit. If configuration signaling is received, a reporting time is calculated based on a time unit configured by using the configuration signaling.

In this embodiment, the first device and the second device may be terminal devices or network devices, and there are three scenarios as follows: (1) the first device is a network device, and the second device is a terminal device; (2) the first device is a terminal device, and the second device is a network device; and (3) the first device is a terminal device, and the second device is also a terminal device.

In this embodiment, when a time unit originally used for sending the first message cannot carry the message, a time unit capable of carrying the message is reselected. In this way, a probability that the message can still be sent increases when a type of the time unit changes dynamically.

The following further describes some content in this embodiment by using an example. For ease of description, the following uses an example in which the first message is a periodic message, the first device is a terminal device, and the second device is a network device.

In S201, the terminal device determines, based on a first configuration of a first periodic message, a first time unit for sending the first periodic message.

Herein, the terminal device determines a series of sending times of the first periodic message based on the first configuration, and the first time unit is one of the series of sending times. A periodic channel quality indicator (channel-quality indicator, CQI) is used as an example. A higher layer configures a parameter, and a period and an offset are obtained based on the parameter. The network device configures a parameter I_{CQI/PMI} by using RRC. The terminal device obtains a period N_{pd} and an offset N_{offset} through calculation based on the I_{CQI/PMI}, to obtain a reporting moment (reporting in which subframe) of the CQI.

In S202, when learning that a type of the first time unit changes, the terminal device determines whether a resource capable of carrying the first periodic message exists in the first time unit.

Herein, the terminal device may learn that the type of the first time unit changes from the network device in a manner such as signaling.

In S203, when the resource capable of carrying the first periodic message does not exist in the first time unit, the terminal device determines a second time unit based on a second configuration of the first periodic message. The resource capable of carrying the first periodic message exists in the second time unit, and the first rule is that the terminal device determines the second time unit starting from a time unit closest to the first time unit.

In an example, the second configuration is physical layer signaling (DCI), and dynamically indicates that a sending location is a time unit that is located after the first time unit and that is closest to the first time unit. In this case, the terminal device determines a time unit that is closest to the first time unit and that satisfies a condition as the second time unit. Alternatively, the second configuration may be RRC signaling, and indicates that a sending location is a time unit that is located after the first time unit and that is closest to the first time unit.

In another example, the second configuration is a new higher layer parameter sent by using higher layer signaling, and a new sending period and a new offset can be learned based on the new higher layer parameter. A series of new sending locations can be obtained based on the new sending period and the new offset, and the sending locations are candidate time units. The terminal device determines a time unit that is closest to the first time unit and that satisfies a condition as the second time unit. In this case, the second time unit may be located before the first time unit.

In S204, when the second time unit exists, the terminal device sends the first periodic message to the network device in the second time unit. When the second time unit does not exist, the terminal device discards the first periodic message.

The following further describes some content in this embodiment by using an example. For ease of description, the following uses an example in which the first message is a periodic message, the first device is a network device, and the second device is a terminal device.

In S201, the network device determines, based on a first configuration of a first periodic message, a first time unit for sending the first periodic message.

Herein, a periodic CSI-RS is used as an example. The network device configures a parameter I_{CSI-RS}, and a period T and an offset are obtained through calculation, so as to learn that the CSI-RS is periodically sent in which downlink subframe.

In S202, when learning that a type of the first time unit changes, the network device determines whether a resource capable of carrying the first periodic message exists in the first time unit.

In S203, when the resource capable of carrying the first periodic message does not exist in the first time unit, the network device determines, according to a first rule, a second time unit for sending the first periodic message, where the resource capable of carrying the first message exists in the second time unit.

In an example, a predetermined rule indicates that a sending location is a time unit that is closest to a current time and that has a time interval greater than or equal to a first threshold with the current time. The network device performs determining starting from a time unit that has a time interval equal to the first threshold with the current time, and determines, from the time unit and a time unit located after the time unit, a time unit that is closest to the current time and that satisfies a condition as the second time unit.

In S204, the network device sends the first periodic message to the terminal device in the second time unit.

The following further describes some content in this embodiment by using an example. For ease of description, the following uses an example in which the first message is an aperiodic message, the first device is a terminal device, and the second device is a network device.

In S201, the terminal device determines, based on a first configuration of a first aperiodic message, a first time unit for sending the first aperiodic message.

In S202, when the first time unit arrives, the terminal device determines whether a resource capable of carrying the first aperiodic message exists in the first time unit.

In S205, when the resource capable of carrying the first aperiodic message exists in the first time unit, the terminal device sends the first aperiodic message to the network device in the first time unit.

In S203, when there is no resource capable of carrying the first aperiodic message in the first time unit, the terminal device determines a second time unit based on a second configuration, where the resource capable of carrying the first aperiodic message exists in the second time unit.

In an example, the second configuration may be a higher layer parameter or higher layer signaling, and a plurality of (the plurality of herein means two or more) time units may be triggered as candidate time units. If more than one time unit capable of carrying the first aperiodic message exists in these time units, the first aperiodic message is sent in a time unit that is closest to the first time unit and that is selected from the more than one time unit, or the first aperiodic message is sent in each of a plurality of second time units that satisfy a requirement.

In S204, when the second time unit exists, the terminal device sends the first aperiodic message to the network device in the second time unit. When the second time unit does not exist, the terminal device discards the first aperiodic message.

FIG. 6 shows an embodiment of a first device according to this application, and the first device includes a processing unit 710 and a sending unit 720.

The processing unit 710 is configured to determine, based on a first configuration of a first message, a first time unit for sending the first message.

The processing unit 710 is further configured to determine whether a resource capable of carrying the first message exists in the first time unit.

The processing unit 710 is further configured to: when the resource capable of carrying the first message does not exist in the first time unit, determine at least one second time unit for sending the first message, where the resource capable of carrying the first message exists in each second time unit.

The sending unit 720 is configured to send the first message to a second device in the at least one second time unit.

Optionally, the processing unit 710 is further configured to: determine at least one candidate time unit based on a second configuration; and determine the at least one second time unit from the at least one candidate time unit.

Optionally, the processing unit 710 is further configured to determine the at least one second time unit according to a first rule.

Optionally, the processing unit 710 is further configured to determine the at least one second time unit from the at least one candidate time unit according to a first rule.

Optionally, the first rule includes: determining the at least one second time unit starting from a time unit closest to the first time unit.

Optionally, the first rule includes: determining the at least one second time unit starting from a time unit located in front among the second time units in time domain.

Optionally, the first rule includes that a time interval between each second time unit and a current time is greater than or equal to a first threshold, where the first threshold is determined based on a device capability of the first device.

Optionally, the first rule includes that a time interval between each second time unit and a current time is less than or equal to a second threshold, where the second threshold is determined based on a delay of the first message.

Optionally, the first rule includes that each second time unit is located after the first time unit.

Optionally, the first rule is determined based on the second configuration of the first message, or the first rule is predefined.

Optionally, the processing unit 710 is further configured to: when the at least one second time unit exists, send the first message to a second device in the at least one second time unit.

Optionally, the processing unit 710 is further configured to discard the first message when the at least one second time unit does not exist.

Optionally, the sending unit 720 is further configured to: when the resource capable of carrying the first message exists in the first time unit, send the first message to the second device in the first time unit.

Optionally, granularities of the time units are one type of the following: a frame, a subframe, a slot, a mini-slot, a symbol, a TTI, and a millisecond.

Optionally, the processing unit 710 is further configured to: when the at least one second time unit is at least two second time units, segment the first message. The sending unit is further configured to send a segmented first message to the second device in each of the at least two second time units.

Optionally, the sending unit 720 is further configured to: when the at least one second time unit is at least two second time units, send the first message to the second device in each of the at least two second time units.

For detailed descriptions of technical details and beneficial effects in this embodiment, refer to the foregoing method embodiments.

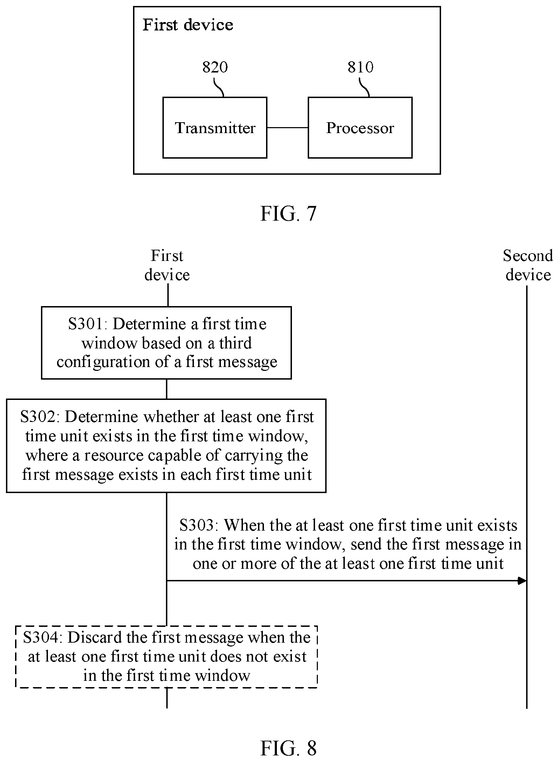

FIG. 7 shows another embodiment of a first device according to this application, and the first device includes a processor 810 and a transmitter 820.

The processor 810 is configured to determine, based on a first configuration of a first message, a first time unit for sending the first message.

The processor 810 is further configured to determine whether a resource capable of carrying the first message exists in the first time unit.

The processor 810 is further configured to: when the resource capable of carrying the first message does not exist in the first time unit, determine at least one second time unit for sending the first message, where the resource capable of carrying the first message exists in each second time unit.

The transmitter 820 is configured to send the first message to a second device in the at least one second time unit.

Optionally, the processor 810 is further configured to: determine at least one candidate time unit based on a second configuration; and determine the at least one second time unit from the at least one candidate time unit.

Optionally, the processor 810 is further configured to determine the at least one second time unit according to a first rule.

Optionally, the processor 810 is further configured to determine the at least one second time unit from the at least one candidate time unit according to a first rule.

Optionally, the first rule includes: determining the at least one second time unit starting from a time unit closest to the first time unit.

Optionally, the first rule includes: determining the at least one second time unit starting from a time unit located in front among the second time units in time domain.

Optionally, the first rule includes that a time interval between each second time unit and a current time is greater than or equal to a first threshold, where the first threshold is determined based on a device capability of the first device.

Optionally, the first rule includes that a time interval between each second time unit and a current time is less than or equal to a second threshold, where the second threshold is determined based on a delay of the first message.

Optionally, the first rule includes that each second time unit is located after the first time unit.

Optionally, the first rule is determined based on the second configuration of the first message, or the first rule is predefined.

Optionally, the processor 810 is further configured to: when the at least one second time unit exists, send the first message to a second device in the at least one second time unit.

Optionally, the processor 810 is further configured to discard the first message when the at least one second time unit does not exist.

Optionally, the transmitter 820 is further configured to: when the resource capable of carrying the first message exists in the first time unit, send the first message to the second device in the first time unit.

Optionally, granularities of the time units are one type of the following: a frame, a subframe, a slot, a mini-slot, a symbol, a TTI, and a millisecond.

Optionally, the processor 810 is further configured to: when the at least one second time unit is at least two second time units, segment the first message. The transmitter 820 is further configured to send a segmented first message to the second device in each of the at least two second time units.

Optionally, the transmitter 820 is further configured to: when the at least one second time unit is at least two second time units, send the first message to the second device in each of the at least two second time units.

For detailed descriptions of technical details and beneficial effects in this embodiment, refer to the foregoing method embodiments.

FIG. 8 shows another embodiment of a message sending method according to this application, and the method includes S301, S302, and S303.

S301: A first device determines a first time window based on a third configuration of a first message.

Herein, the first message may be a periodic message, or may be an aperiodic message. For the periodic message, the first configuration is a parameter configured by a higher layer, and the first device determines a period and an offset based on the parameter. For the aperiodic message, the first configuration is a fixed timing relationship sent by using physical layer signaling. A length of the first time window may be determined based on the third configuration, or may be predefined in a protocol.

Herein, a time window refers to at least two consecutive time units. For example, when a granularity of the time unit is millisecond, the time window is a consecutive time period in a unit of millisecond. When a granularity of the time unit is a slot, the time window includes at least two consecutive slots.

For example, when a current time is n, a terminal device determines that a series of sending times of the first message are time units such as n + 2 and n + 10 based on the third configuration, where n + 2 is a start location of the first time window. In addition, the terminal device further determines that the length of the first time window is 5. In this way, time units included in the first time window are n + 2, n + 3, n + 4, n + 5, and n + 6.

S302: The first device determines whether at least one first time unit exists in the first time window, where a resource capable of carrying the first message exists in each first time unit.

S303: When the at least one first time unit exists in the first time window, the first device sends the first message to a second device in one or more of the at least one first time unit.

To be specific, when one first time unit exists in the first time window, the first device sends the first message to the second device in the time unit. When at least two first time units exist in the first time window, the first device may send the first message to the second device in all the first time units, or may send the first message to the second device in some (some herein means one or more) of the first time units.

For example, when the time units included in the first time window are n + 2, n + 3, n + 4, n + 5, and n + 6, and when the first time unit is n + 2, the first device sends the first message to the second device in the n + 2 time unit. When the first time unit includes n + 2 and n + 3, the first device may send the first message to the second device in the n + 2 time unit or the n + 3 time unit, or may send the first message to the second device in the two time units.

Optionally, in S303, when the at least one first time unit includes at least two first time units, and when the one or more first time units are one first time unit, the first time unit is one of a first time unit closest to the start location of the first time window in the at least two first time units, a first time unit closest to an end location of the first time window in the at least two first time units, and a first time unit closest to a central location of the first time window in the at least two first time units.

To be specific, when the at least two first time units exist in the first time window, and when the first device needs to send the first message to the second device only in one first time unit, the first device sends the first message to the second device in one of a first time unit closest to the start location of the first time window in the at least two first time units, a first time unit closest to an end location of the first time window in the at least two first time units, and a first time unit closest to a central location of the first time window in the at least two first time units.

For example, when the time units included in the first time window are n + 2, n + 3, n + 4, n + 5, and n + 6, and when the first time units are n + 2, n + 4, and n + 5, the first device may send the first message to the second device in the n + 2 time unit closest to the start location of the first time window in the five time units, or may send the first message to the second device in the first time unit n + 4 closest to the central location of the first time window in the five time units, or may send the first message to the second device in the first time unit closest to the end location of the first time window in the five time units.

Optionally, in S303, when the at least one first time unit includes at least two first time units, and when the one or more first time units are two or more first time units, the first device segments the first message, and sends a segmented first message to the second device in each of the two or more first time units.

To be specific, when the at least two first time units exist in the first time window, and when the first device needs to send the first message to the second device in two or more first time units, the first device segments the first message, and sends a segmented first message to the second device in each of the two or more first time units.

For example, when the first device needs to send the first message to the second device in two first time units, the first device segments the first message into a first part and a second part of the first message (namely, information carried in the first part and the second part of the first message is combined into information carried in the first message, and the first part and the second part of the first message may also be referred to as a second message and a third message), and sends the first part of the first message to the second device in one time unit of the two first time units, and sends the other part of the first message to the second device in the other time unit of the two first time units.

For example, when the first message is UCI, the UCI includes an ACK/a NACK and CSI. In this case, the UCI may be divided into two parts: the ACK/the NACK and the CSI. The ACK/NACK is sent to the second device in one time unit of the two first time units, and the CSI is sent to the second device in the other time unit. For another example, when the first message is CSI, the CSI may be divided into a CQI, a precoding matrix indicator (precoding-matrix indicator, PMI), and the like.

Optionally, in S303, when the at least one first time unit includes at least two first time units, and when the one or more first time units are two or more first time units, the first device sends the first message to the second device in each of the two or more first time units.

To be specific, when the at least two first time units exist in the first time window, and when the first device needs to send the first message to the second device in two or more first time units, the first device sends the first message to the second device in the two or more first time units (that is, the first device sends the complete first message in each of the first time units). In this case, reliability of transmitting the first message is improved.

Optionally, this embodiment further includes S304.

S304: The first device discards the first message when the at least one first time unit does not exist in the first time window.

Optionally, in this embodiment, granularities of the time window and the time unit are one type of the following: a frame, a subframe, a slot, a mini-slot, a symbol, a TTI, and a millisecond.

In this embodiment, the first device and the second device may be terminal devices or network devices, and there are three scenarios as follows: (1) the first device is a network device, and the second device is a terminal device; (2) the first device is a terminal device, and the second device is a network device; and (3) the first device is a terminal device, and the second device is also a terminal device.

In this embodiment, time units located in a specific time range (a time window) are used as alternatives of time units for sending the first message. In this case, as long as one of the time units used as alternatives is capable of carrying the message, the message can be sent. In this way, a probability that the message can still be sent increases when a type of the time units changes dynamically.

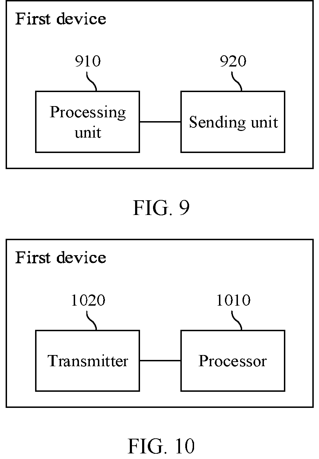

FIG. 9 shows another embodiment of a first device according to this application, and the first device includes a processing unit 910 and a sending unit 920.

The processing unit 910 is configured to determine a first time window based on a third configuration of a first message.

The processing unit 910 is further configured to determine whether at least one first time unit exists in the first time window, where a resource capable of carrying the first message exists in each first time unit.

The sending unit 920 is configured to: when the at least one first time unit exists in the first time window, send the first message to a second device in one or more of the at least one first time unit.

Optionally, when the at least one first time unit includes at least two first time units, and when the one or more first time units are one first time unit, the first time unit is one of a first time unit closest to a start location of the first time window in the at least two first time units, a first time unit closest to an end location of the first time window in the at least two first time units, and a first time unit closest to a central location of the first time window in the at least two first time units.

Optionally, the processing unit 910 is further configured to: segment the first message when the at least one first time unit includes at least two first time units, and when the one or more first time units are two or more first time units. The sending unit 920 is further configured to send a segmented first message to the second device in each of the two or more first time units.

Optionally, the sending unit 920 is further configured to: when the at least one first time unit includes at least two first time units, and when the one or more first time units are two or more first time units, send the first message to the second device in each of the two or more first time units.

Optionally, the processing unit 910 is further configured to discard the first message when the at least one first time unit does not exist in the first time window.

Optionally, granularities of the time window and the time unit are one type of the following: a frame, a subframe, a slot, a mini-slot, a symbol, a TTI, and a millisecond.

For detailed descriptions of technical details and beneficial effects in this embodiment, refer to the foregoing method embodiments.

FIG. 10 shows another embodiment of a first device according to this application, and the first device includes a processor 1010 and a transmitter 1020.

The processor 1010 is configured to determine a first time window based on a third configuration of a first message.

The processor 1010 is further configured to determine whether at least one first time unit exists in the first time window, where a resource capable of carrying the first message exists in each first time unit.

The transmitter 1020 is configured to: when the at least one first time unit exists in the first time window, send the first message to a second device in one or more of the at least one first time unit.

Optionally, when the at least one first time unit includes at least two first time units, and when the one or more first time units are one first time unit, the first time unit is one of a first time unit closest to a start location of the first time window in the at least two first time units, a first time unit closest to an end location of the first time window in the at least two first time units, and a first time unit closest to a central location of the first time window in the at least two first time units.

Optionally, the processor 1010 is further configured to: segment the first message when the at least one first time unit includes at least two first time units, and when the one or more first time units are two or more first time units. The sending unit 920 is further configured to send a segmented first message to the second device in each of the two or more first time units.

Optionally, the transmitter 1020 is further configured to: when the at least one first time unit includes at least two first time units, and when the one or more first time units are two or more first time units, send the first message to the second device in each of the two or more first time units.

Optionally, the processor 1010 is further configured to discard the first message when the at least one first time unit does not exist in the first time window.

Optionally, granularities of the time window and the time unit are one type of the following: a frame, a subframe, a slot, a mini-slot, a symbol, a TTI, and a millisecond.

For detailed descriptions of technical details and beneficial effects in this embodiment, refer to the foregoing method embodiments.

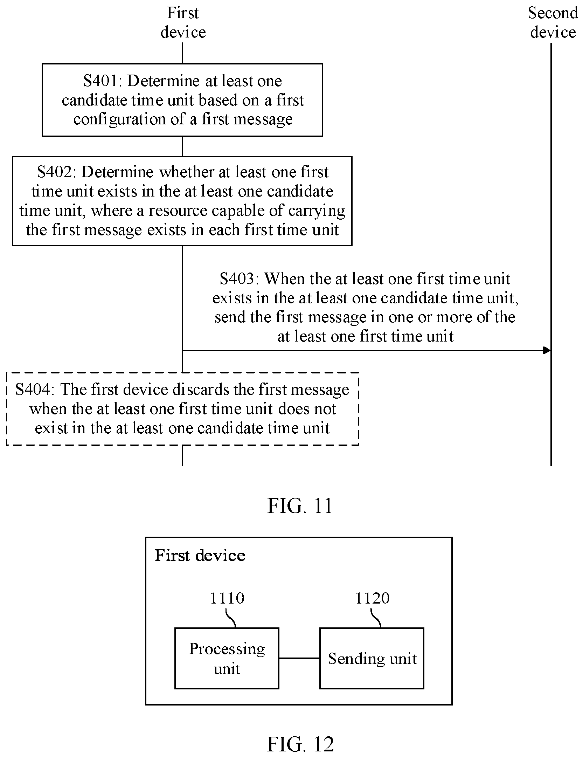

FIG. 11 shows another embodiment of a message sending method according to this application, and the method includes S401, S402, and S403.

S401: A first device determines at least one candidate time unit based on a first configuration of a first message.

The first message may be a periodic message, or may be an aperiodic message. For the periodic message, the first configuration is a parameter configured by a higher layer, and the first device determines a period and an offset based on the parameter. For the aperiodic message, the first configuration is a fixed timing relationship sent by using physical layer signaling.

For example, when a current time is n, a terminal device determines, based on the first configuration, that the at least one candidate time unit includes n + 2, n + 4, and n + 6.

S402: The first device determines whether at least one first time unit exists in the at least one candidate time unit, where a resource capable of carrying the first message exists in each first time unit.

S403: When the at least one first time unit exists in the at least one candidate time unit, the first device sends the first message to a second device in one or more of the at least one first time unit.

To be specific, when one first time unit exists in the at least one candidate time unit, the first device sends the first message to the second device in the time unit. When at least two first time units exist in the at least one candidate time unit, the first device may send the first message to the second device in all the first time units, or may send the first message to the second device in some (some herein means one or more) of the first time units.

For example, when the at least one candidate time unit includes n + 2, n + 4, and n + 6, and when the first time unit is n + 2, the first device sends the first message to the second device in the n + 2 time unit. When the first time unit includes n + 2 and n + 4, the first device may send the first message to the second device in the n + 2 time unit or the n + 4 time unit, or may send the first message to the second device in the two time units.

Optionally, in S403, when the at least one first time unit includes at least two first time units, and when the one or more first time units are two or more first time units, the first device segments the first message, and sends a segmented first message to the second device in each of the at least two first time units.

To be specific, when the at least two first time units exist in the at least one candidate time unit, and when the first device needs to send the first message to the second device in two or more first time units, the first device segments the first message, and sends a segmented first message to the second device in each of the two or more first time units.

For example, when the first device needs to send the first message to the second device in two first time units, the first device segments the first message into a first part and a second part of the first message (namely, information carried in the first part and the second part of the first message is combined into information carried in the first message, and the first part and the second part of the first message may also be referred to as a second message and a third message), and sends the first part of the first message to the second device in one time unit of the two first time units, and sends the other part of the first message to the second device in the other time unit of the two first time units.

Optionally, in S403, when the at least one first time unit includes at least two first time units, and when the one or more first time units are two or more first time units, the first device sends the first message to the second device in each of the at least two first time units.

To be specific, when the at least two first time units exist in the at least one candidate time unit, and when the first device needs to send the first message to the second device in two or more first time units, the first device sends the first message to the second device in each of the two or more first time units (that is, the first device sends the complete first message in each of the first time units). In this case, reliability of transmitting the first message is improved.

Optionally, this embodiment further includes S404.

S404: The first device discards the first message when the at least one first time unit does not exist in the at least one candidate time unit.

Optionally, in this embodiment, granularities of the time units are one type of the following: frames, subframes, slots, mini-slots, symbols, TTIs, and milliseconds.

In this embodiment, the first device and the second device may be terminal devices or network devices, and there are three scenarios as follows: (1) the first device is a network device, and the second device is a terminal device; (2) the first device is a terminal device, and the second device is a network device; and (3) the first device is a terminal device, and the second device is also a terminal device.

In this embodiment, a plurality of time units are used as alternatives of time units for sending the first message. In this case, as long as one of the time units used as alternatives is capable of carrying the message, the message can be sent. In this way, a probability that the message can still be sent increases when a type of the time unit changes dynamically.

FIG. 12 shows another embodiment of a first device according to this application, and the first device includes a processing unit 1110 and a sending unit 1120.

The processing unit 1110 is configured to determine at least one candidate time unit based on a first configuration of a first message.

The processing unit 1110 is further configured to determine whether at least one first time unit exists in the at least one candidate time unit, where a resource capable of carrying the first message exists in each first time unit.

The sending unit 1120 is configured to: when the at least one first time unit exists in the at least one candidate time unit, send the first message to the second device in one or more of the at least one first time unit.

Optionally, the processing unit 1110 is further configured to: segment the first message when the at least one first time unit includes at least two first time units, and when the one or more first time units are two or more first time units. The sending unit 1120 is further configured to send a segmented first message to the second device in each of the at least two first time units.

Optionally, the sending unit 1120 is further configured to: when the at least one first time unit includes at least two first time units, and when the one or more first time units are two or more first time units, send the first message to the second device in each of the at least two first time units.

Optionally, the processing unit 1110 is further configured to discard the first message when the at least one first time unit does not exist in the at least one candidate time unit.

Optionally, granularities of the time units are one type of the following: a frame, a subframe, a slot, a mini-slot, a symbol, a TTI, and a millisecond.

For detailed descriptions of technical details and beneficial effects in this embodiment, refer to the foregoing method embodiments.

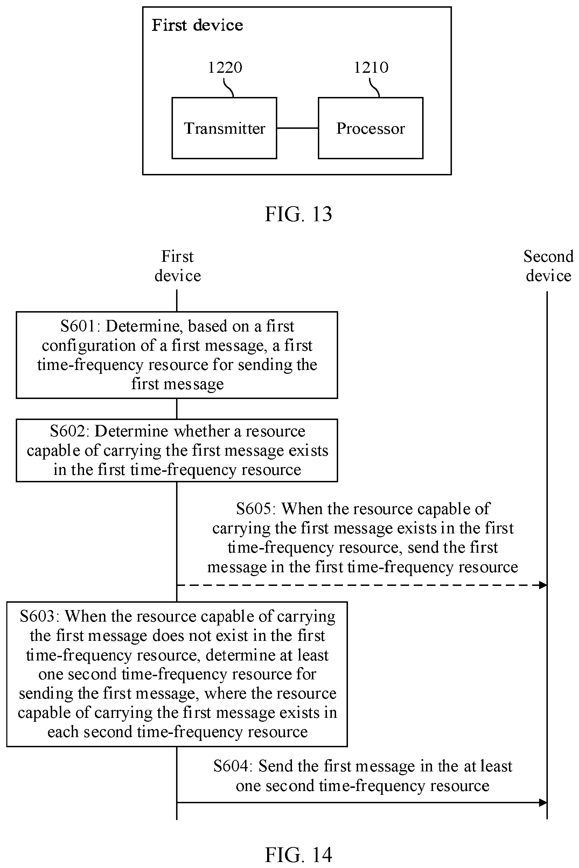

FIG. 13 shows another embodiment of a first device according to this application, and the first device includes a processor 1210 and a transmitter 1220.

The processor 1210 is configured to determine at least one candidate time unit based on a first configuration of a first message.

The processor 1210 is further configured to determine whether at least one first time unit exists in the at least one candidate time unit, where a resource capable of carrying the first message exists in each first time unit.

The processor 1210 is configured to: when the at least one first time unit exists in the at least one candidate time unit, send the first message to the second device in one or more of the at least one first time unit.

Optionally, the processor 1210 is further configured to: segment the first message when the at least one first time unit includes at least two first time units, and when the one or more first time units are two or more first time units. The transmitter 1220 is further configured to send a segmented first message to the second device in each of the at least two first time units.

Optionally, the transmitter 1220 is further configured to: when the at least one first time unit includes at least two first time units, and when the one or more first time units are two or more first time units, send the first message to the second device in each of the at least two first time units.

Optionally, the processor 1210 is further configured to discard the first message when the at least one first time unit does not exist in the at least one candidate time unit.

Optionally, granularities of the time units are one type of the following: a frame, a subframe, a slot, a mini-slot, a symbol, a TTI, and a millisecond.

For detailed descriptions of technical details and beneficial effects in this embodiment, refer to the foregoing method embodiments.

FIG. 14 shows another embodiment of a message sending method according to this application, and the method includes S601 and S602.

S601: A first device determines, based on a first configuration of a first message, a first resource for sending the first message.

S602: The first device determines whether a resource capable of carrying the first message exists in the first resource.

S603: When the resource capable of carrying the first message does not exist in the first resource, the first device determines at least one second resource for sending the first message, where the resource capable of carrying the first message exists in each second resource.

S604: The first device sends the first message to a second device in the at least one second resource.

Optionally, this embodiment further includes S605.

S605: When the resource capable of carrying the first message exists in the first resource, the first device sends the first message to the second device on the first resource.

Optionally, the first resource and the second resource include resources in at least one of time domain, frequency domain, space domain, and code domain.

In an example, the first resource and the second resource may be time-frequency resources. In this case, the first message may occupy more frequency domain extended resources in frequency domain to ensure message sending.

Optionally, in this embodiment, granularities of the first resource and the second resource in time domain are one type of the following: a frame, a subframe, a slot, a mini-slot, a symbol, a TTI, and a millisecond.

In this embodiment, the first device and the second device may be terminal devices or network devices, and there are three scenarios as follows: (1) the first device is a network device, and the second device is a terminal device; (2) the first device is a terminal device, and the second device is a network device; and (3) the first device is a terminal device, and the second device is also a terminal device.

In this embodiment, when a time-frequency resource originally used for sending the first message cannot carry the message, a time unit capable of carrying the time-frequency resource is reselected. In this way, a probability that the message can still be sent increases when a type of the time-frequency resource changes dynamically.

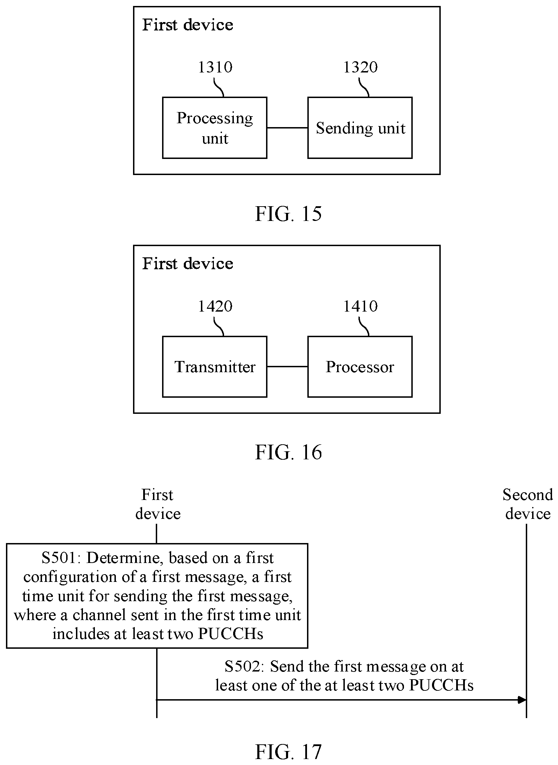

FIG. 15 shows another embodiment of a first device according to this application, and the first device includes a processing unit 1310 and a sending unit 1320.

The processing unit 1310 is configured to determine, based on a first configuration of a first message, a first resource for sending the first message.

The processing unit 1310 is further configured to determine whether a resource capable of carrying the first message exists in the first resource.

The processing unit 1310 is further configured to: when the resource capable of carrying the first message does not exist in the first resource, determine at least one second resource for sending the first message, where the resource capable of carrying the first message exists in each second resource.

The sending unit 1320 is further configured to send the first message to a second device on the at least one second resource.

Optionally, the sending unit 1320 is further configured to: when the resource capable of carrying the first message exists in the first resource, send the first message to a second device on the first resource.

Optionally, the first resource and the second resource include resources in at least one of time domain, frequency domain, space domain, and code domain.

Optionally, in this embodiment, granularities of the first resource and the second resource in time domain are one type of the following: a frame, a subframe, a slot, a mini-slot, a symbol, a TTI, and a millisecond.

Optionally, granularities of the first resource and the second resource in time domain are one type of the following: a frame, a subframe, a slot, a mini-slot, a symbol, a TTI, and a millisecond.

For detailed descriptions of technical details and beneficial effects in this embodiment, refer to the foregoing method embodiments.

FIG. 16 shows another embodiment of a first device according to this application, and the first device includes a processor 1410 and a transmitter 1420.

The processor 1410 is configured to determine, based on a first configuration of a first message, a first resource for sending the first message.

The processor 1410 is further configured to determine whether a resource capable of carrying the first message exists in the first resource.

The processor 1410 is further configured to: when the resource capable of carrying the first message does not exist in the first resource, determine at least one second resource for sending the first message, where the resource capable of carrying the first message exists in each second resource.

The transmitter 1420 is further configured to send the first message to a second device on the at least one second resource.

Optionally, the transmitter 1420 is further configured to: when the resource capable of carrying the first message exists in the first resource, send the first message to a second device on the first resource.

Optionally, the first resource and the second resource include resources in at least one of time domain, frequency domain, space domain, and code domain.

Optionally, in this embodiment, granularities of the first resource and the second resource in time domain are one type of the following: a frame, a subframe, a slot, a mini-slot, a symbol, a TTI, and a millisecond.

Optionally, granularities of the first resource and the second resource in time domain are one type of the following: a frame, a subframe, a slot, a mini-slot, a symbol, a TTI, and a millisecond.

For detailed descriptions of technical details and beneficial effects in this embodiment, refer to the foregoing method embodiments.

In a 5G NR system, an uplink control channel (uplink control channel, PUCCH) has different quantities of symbols and different uplink channel formats, and a short PUCCH (short PUCCH) and a long PUCCH (long PUCCH), a short PUCCH and a short PUCCH, and a long PUCCH and a long PUCCH may appear in a same slot. In this case, a new method for sending uplink control information (uplink control information, UCI) is required, the PUCCH mentioned herein includes the uplink control channel in the 5G NR system.

FIG. 17 shows another embodiment of a message sending method according to this application, and the method includes S501 and S502.

S501: A first device determines, based on a first configuration of a first message, a first time unit for sending the first message, where a channel sent in the first time unit includes at least two PUCCHs.

S502: The first device sends the first message on at least one of the at least two PUCCHs.

Optionally, the at least two PUCCHs include a short PUCCH and a long PUCCH. In S502, when a resource capable of carrying the first message exists in the short PUCCH, the first device sends the first message to a second device on a PUCCH located before another PUCCH in the at least two PUCCHs. When the resource capable of carrying the first message does not exist in the short PUCCH, and when the resource capable of carrying the first message exists in the long PUCCH, the first device sends the first message to a second device on the long PUCCH.

To be specific, the first device sends the first message to the second device only on one PUCCH (that is, the first message is sent either on the short PUCCH or the long PUCCH). An example in which the channel sent in the first time unit includes two PUCCHs (the short PUCCH and the long PUCCH) and the first message is UCI is used. If content of the UCI is in a carrying capacity range that can be supported by the short PUCCH, it is specified that the first message is sent on the PUCCH located before another PUCCH in the two PUCCHs. For example, if the short PUCCH is located before the long PUCCH, the first message is sent on the short PUCCH. If the long PUCCH is located before the short PUCCH, the first message is sent on the long PUCCH. If content of the UCI is not in a carrying capacity range that can be supported by the short PUCCH but is in a carrying capacity range that can be supported by the long PUCCH, the first message is sent on the long PUCCH.

Optionally, in S502, when the at least one PUCCH includes two or more PUCCHs, the first device segments the first message, and sends a segmented first message to the second device on each of the two or more PUCCHs.

An example in which the channel sent in the first time unit includes two PUCCHs (a short PUCCH and a long PUCCH) is used. The first device segments the first message into a first part and a second part of the first message (that is, information carried in the first part and the second part of the first message is combined into information carried in the first message, and the first part and the second part of the first message may also be referred to as a second message and a third message), sends the first part of the first message to the second device on the short PUCCH, and sends the other part of the first message to the second device on the long PUCCH.

Optionally, in S502, the first device sends a segmented first message having a higher delay requirement on a PUCCH located before another PUCCH in the two or more PUCCHs, and sends a segmented first message having a lower delay requirement on a PUCCH that is located after another PUCCH in the two or more PUCCHs.

An example in which the channel sent in the first time unit includes two PUCCHs (the short PUCCH and the long PUCCH) and the first message is UCI is used. The first device sends a part (for example, an ACK/a NACK, or an ACK/a NACK and an SR) having a higher delay requirement in the UCI to the second device on a PUCCH (the short PUCCH or the long PUCCH) located before the other PUCCH in the two PUCCHs, and sends a part (for example, CSI) having a lower delay requirement in the UCI to the second device on a PUCCH (the short PUCCH or the long PUCCH) located after the other PUCCH in the two PUCCHs.

Optionally, the at least two PUCCHs include a short PUCCH and a long PUCCH. In S502, the first device sends a segmented first message having a smaller quantity of bits on the short PUCCH, and sends a segmented first message having a larger quantity of bits on the long PUCCH.

An example in which the channel sent in the first time unit includes two PUCCHs (the short PUCCH and the long PUCCH), and the first message is UCI is used. The first device sends a part (for example, an ACK/a NACK) having a smaller quantity of bits in the UCI to the second device on the short PUCCH, and sends a part (for example, CSI) having a larger quantity of bits in the UCI on the long PUCCH.

Optionally, in this embodiment, granularities of the time units are one type of the following: a frame, a subframe, a slot, a mini-slot, a symbol, a TTI, and a millisecond.

In this embodiment, the first device and the second device may be terminal devices or network devices, and there are three scenarios as follows: (1) the first device is a network device, and the second device is a terminal device; (2) the first device is a terminal device, and the second device is a network device; and (3) the first device is a terminal device, and the second device is also a terminal device.

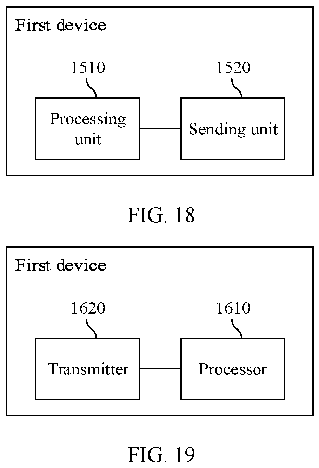

FIG. 18 shows another embodiment of a first device according to this application, and the first device includes a processing unit 1510 and a sending unit 1520.

The processing unit 1510 is configured to determine, based on a first configuration of a first message, a first time unit for sending the first message, where a channel sent in the first time unit includes at least two PUCCHs.

The sending unit 1520 is configured to send the first message on at least one of the at least two PUCCHs.

Optionally, the at least two PUCCHs include a short PUCCH and a long PUCCH. The sending unit 1520 is further configured to: when a resource capable of carrying the first message exists in the short PUCCH, send the first message to a second device on a PUCCH located before another PUCCH in the at least two PUCCHs; or when the resource capable of carrying the first message does not exist in the short PUCCH, and when the resource capable of carrying the first message exists in the long PUCCH, send the first message to a second device on the long PUCCH.

Optionally, the sending unit 1520 is further configured to: when the at least one PUCCH includes two or more PUCCHs, segment the first message; and send a segmented first message to the second device on each of the two or more PUCCHs.

Optionally, the sending unit 1520 is further configured to: send a segmented first message having a higher delay requirement on a PUCCH located before another PUCCH in the two or more PUCCHs; and send a segmented first message having a lower delay requirement on a PUCCH that is located after another PUCCH in the two or more PUCCHs.

Optionally, the at least two PUCCHs include a short PUCCH and a long PUCCH. The sending unit 1520 is further configured to: send a segmented first message having a smaller quantity of bits on the short PUCCH; and send a segmented first message having a larger quantity of bits on the long PUCCH.

Optionally, granularities of the time units are one type of the following: a frame, a subframe, a slot, a mini-slot, a symbol, a TTI, and a millisecond.

For detailed descriptions of technical details and beneficial effects in this embodiment, refer to the foregoing method embodiments.

FIG. 19 shows another embodiment of a first device according to this application, and the first device includes a processor 1610 and a transmitter 1620.

The processor 1610 is configured to determine, based on a first configuration of a first message, a first time unit for sending the first message, where a channel sent in the first time unit includes at least two PUCCHs.

The transmitter 1620 is configured to send the first message on at least one of the at least two PUCCHs.

Optionally, the at least two PUCCHs include a short PUCCH and a long PUCCH. The transmitter 1620 is further configured to: when a resource capable of carrying the first message exists in the short PUCCH, send the first message to a second device on a PUCCH located before another PUCCH in the at least two PUCCHs; or when the resource capable of carrying the first message does not exist in the short PUCCH, and when the resource capable of carrying the first message exists in the long PUCCH, send the first message to a second device on the long PUCCH.

Optionally, the processor 1610 is further configured to: when the at least one PUCCH includes two or more PUCCHs, segment the first message. The transmitter 1620 is further configured to send a segmented first message to the second device on each of the two or more PUCCHs.

Optionally, the transmitter 1620 is further configured to: send a segmented first message having a higher delay requirement on a PUCCH located before another PUCCH in the two or more PUCCHs; and send a segmented first message having a lower delay requirement on a PUCCH that is located after another PUCCH in the two or more PUCCHs.

Optionally, the at least two PUCCHs include a short PUCCH and a long PUCCH. The transmitter 1620 is further configured to: send a segmented first message having a smaller quantity of bits on the short PUCCH; and send a segmented first message having a larger quantity of bits on the long PUCCH.

Optionally, a granularity of the time unit is one of the following: a frame, a subframe, a slot, a mini-slot, a symbol, a TTI, and a millisecond.

For detailed descriptions of technical details and beneficial effects in this embodiment, refer to the foregoing method embodiments.

It should be noted that the embodiments of this application may be combined with each other. "At least one of A, B, and C" or "at least one type of A, B, and C" refers to one of the following cases: A; B; C; A and B; B and C; and A, B, and C.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A message sending method performed by a first device, comprising:
determining (S201), based on a first configuration of a first message, a first time unit for sending the first message;
determining (S202) whether a resource capable of carrying the first message exists in the first time unit;
when (S203) the resource capable of carrying the first message does not exist in the first time unit, determining at least one second time unit for sending the first message, wherein the resource capable of carrying the first message exists in each second time unit, wherein the determining of the at least one second time unit for sending the first message comprises:
determining the at least one second time unit according to a first rule, wherein the first rule comprises: determining the at least one second time unit starting from a time unit located after the first time unit;
sending (S204) the first message to a second device in the at least one second time unit, the method being **characterized in that** the first rule further comprises that a time interval between each second time unit and a current time is greater than or equal to a first threshold, wherein the first threshold is determined based on a device capability of the first device.

2. The method according to claim 1, wherein the determining of the at least one second time unit for sending the first message comprises:
determining at least one candidate time unit based on a second configuration; and
determining the at least one second time unit from the at least one candidate time unit.

3. The method according to claim 2, wherein the determining of the at least one second time unit from the at least one candidate time unit comprises:
determining the at least one second time unit from the at least one candidate time unit according to the first rule.

4. The method according to any one of claims 1 to 3, wherein the first rule comprises: determining the at least one second time unit starting from a time unit located in front among the second time units in time domain.

5. The method according to any one of claims 1 to 4, wherein the first rule comprises that a time interval between each second time unit and a current time is less than or equal to a second threshold, wherein the second threshold is determined based on a delay of the first message.

6. The method according to any one of claims 1 to 5, wherein the first rule comprises that each second time unit is located after the first time unit.

7. The method according to any one of claim 2 or claims 3 to 6, when dependent on claim 2, wherein the first rule is determined based on the second configuration of the first message, or the first rule is predefined.

8. The method according to any one of claims 1 to 7, wherein the sending of the first message to the second device in the at least one second time unit comprises:
when the at least one second time unit exists, sending the first message to a second device in the at least one second time unit.

9. The method according to any one of claims 1 to 8, further comprising:
when the resource capable of carrying the first message exists in the first time unit, sending the first message to the second device in the first time unit.

10. An apparatus configured to perform the method according to any one of claims 1 to 9.

11. A computer-readable storage medium comprising instructions which, when executed by a computer, cause the computer to carry out the method according to any one of claims 1 to 9.

## Patentansprüche

1. Nachrichtensendeverfahren, das durch eine erste Vorrichtung durchgeführt wird, umfassend:
Bestimmen (S201), basierend auf einer ersten Konfiguration einer ersten Nachricht, einer ersten Zeiteinheit zum Senden der ersten Nachricht;
Bestimmen (S202), ob in der ersten Zeiteinheit eine Ressource vorhanden ist, die in der Lage ist, die erste Nachricht zu transportieren;
wenn (S203) die Ressource, die in der Lage ist, die erste Nachricht zu transportieren, in der ersten Zeiteinheit nicht vorhanden ist, Bestimmen mindestens einer zweiten Zeiteinheit zum Senden der ersten Nachricht, wobei die Ressource, die in der Lage ist, die erste Nachricht zu transportieren, in jeder zweiten Zeiteinheit vorhanden ist, wobei das Bestimmen der mindestens einen zweiten Zeiteinheit zum Senden der ersten Nachricht Folgendes umfasst:
Bestimmen der mindestens einen zweiten Zeiteinheit gemäß einer ersten Regel, wobei die erste Regel Folgendes umfasst: Bestimmen der mindestens einen zweiten Zeiteinheit ausgehend von einer Zeiteinheit, die nach der ersten Zeiteinheit liegt;
und
Senden (S204) der ersten Nachricht an eine zweite Vorrichtung in der mindestens einen zweiten Zeiteinheit, wobei das Verfahren **dadurch gekennzeichnet ist, dass** die erste Regel ferner umfasst, dass ein Zeitintervall zwischen jeder zweiten Zeiteinheit und einer aktuellen Zeit größer als oder gleich einem ersten Schwellenwert ist, wobei der erste Schwellenwert basierend auf einer Vorrichtungsfähigkeit der ersten Vorrichtung bestimmt wird.

2. Verfahren nach Anspruch 1, wobei das Bestimmen der mindestens einen zweiten Zeiteinheit zum Senden der ersten Nachricht Folgendes umfasst:
Bestimmen mindestens einer Kandidatenzeiteinheit basierend auf einer zweiten Konfiguration; und
Bestimmen der mindestens einen zweiten Zeiteinheit aus der mindestens einen Kandidatenzeiteinheit.

3. Verfahren nach Anspruch 2, wobei das Bestimmen der mindestens einen zweiten Zeiteinheit aus der mindestens einen Kandidatenzeiteinheit Folgendes umfasst:
Bestimmen der mindestens einen zweiten Zeiteinheit aus der mindestens einen Kandidatenzeiteinheit gemäß der ersten Regel.

4. Verfahren nach einem der Ansprüche 1 bis 3, wobei die erste Regel Folgendes umfasst: Bestimmen der mindestens einen zweiten Zeiteinheit ausgehend von einer Zeiteinheit, die im Zeitbereich unter den zweiten Zeiteinheiten vorn liegt.

5. Verfahren nach einem der Ansprüche 1 bis 4, wobei die erste Regel umfasst, dass ein Zeitintervall zwischen jeder zweiten Zeiteinheit und einer aktuellen Zeit kleiner als oder gleich einem zweiten Schwellenwert ist, wobei der zweite Schwellenwert basierend auf einer Verzögerung der ersten Nachricht bestimmt wird.

6. Verfahren nach einem der Ansprüche 1 bis 5, wobei die erste Regel umfasst, dass jede zweite Zeiteinheit nach der ersten Zeiteinheit liegt.

7. Verfahren nach einem der Ansprüche 2 oder 3 bis 6, sofern abhängig von Anspruch 2, wobei die erste Regel basierend auf der zweiten Konfiguration der ersten Nachricht bestimmt wird oder die erste Regel vordefiniert ist.

8. Verfahren nach einem der Ansprüche 1 bis 7, wobei das Senden der ersten Nachricht an die zweite Vorrichtung in der mindestens einen zweiten Zeiteinheit Folgendes umfasst:
wenn die mindestens eine zweite Zeiteinheit vorhanden ist, Senden der ersten Nachricht an eine zweite Vorrichtung in der mindestens einen zweiten Zeiteinheit.

9. Verfahren nach einem der Ansprüche 1 bis 8, ferner umfassend:
wenn die Ressource, die in der Lage ist, die erste Nachricht zu transportieren, in der ersten Zeiteinheit vorhanden ist, Senden der ersten Nachricht an die zweite Vorrichtung in der ersten Zeiteinheit.

10. Einrichtung, die dazu konfiguriert ist, das Verfahren nach einem der Ansprüche 1 bis 9 durchzuführen.

11. Computerlesbares Speichermedium, umfassend Anweisungen, die, wenn sie durch einen Computer ausgeführt werden, den Computer dazu veranlassen, das Verfahren nach einem der Ansprüche 1 bis 9 durchzuführen.

## Revendications

1. Procédé d'envoi de message réalisé par un premier dispositif, comprenant :
la détermination (S201), sur la base d'une première configuration d'un premier message, d'une première unité de temps pour l'envoi du premier message ;
la détermination (S202) si une ressource capable de transporter le premier message existe ou non dans la première unité de temps ;
lorsque (S203) la ressource capable de transporter le premier message n'existe pas dans la première unité de temps, la détermination d'au moins une seconde unité de temps pour l'envoi du premier message, dans lequel la ressource capable de transporter le premier message existe dans chaque seconde unité de temps,
dans lequel la détermination de l'au moins une seconde unité de temps pour l'envoi du premier message comprend :
la détermination de l'au moins une seconde unité de temps selon une première règle, dans lequel la première règle comprend : la détermination de l'au moins une seconde unité de temps à partir d'une unité de temps située après la première unité de temps ;
et
**l'envoi** (S204) du premier message à un second dispositif dans l'au moins une seconde unité de temps, le procédé étant **caractérisé en ce que** la première règle comprend également le fait qu'un intervalle de temps entre chaque seconde unité de temps et un temps actuel est supérieur ou égal à un premier seuil, dans lequel le premier seuil est déterminé sur la base d'une capacité du premier dispositif.

2. Procédé selon la revendication **1,** dans lequel la détermination de l'au moins une seconde unité de temps pour l'envoi du premier message comprend :
la détermination d'au moins une unité de temps candidate sur la base d'une seconde configuration ; et
la détermination d'au moins une seconde unité de temps à partir de l'au moins une unité de temps candidate.

3. Procédé selon la revendication **2,** dans lequel la détermination de l'au moins une seconde unité de temps à partir de l'au moins une unité de temps candidate comprend :
la détermination d'au moins une seconde unité de temps à partir de l'au moins une unité de temps candidate selon la première règle.

4. Procédé selon l'une quelconque des revendications 1 à 3, dans lequel la première règle comprend : la détermination de l'au moins une seconde unité de temps à partir d'une unité de temps située en avant parmi les secondes unités de temps dans un domaine temporel.

5. Procédé selon l'une quelconque des revendications 1 à 4, dans lequel la première règle comprend le fait qu'un intervalle de temps entre chaque seconde unité de temps et un temps actuel est inférieur ou égal à un second seuil, dans lequel le second seuil est déterminé sur la base d'un retard du premier message.

6. Procédé selon l'une quelconque des revendications 1 à 5, dans lequel la première règle comprend le fait que chaque seconde unité de temps est située après la première unité de temps.

7. Procédé selon l'une quelconque des revendications 2 ou 3 à 6, lorsqu'elles dépendent de la revendication 2, dans lequel la première règle est déterminée sur la base de la seconde configuration du premier message, ou la première règle est prédéfinie.

8. Procédé selon l'une quelconque des revendications 1 à 7, dans lequel l'envoi du premier message au second dispositif dans l'au moins une seconde unité de temps comprend :
lorsque l'au moins une seconde unité de temps existe, l'envoi du premier message à un second dispositif dans l'au moins une seconde unité de temps.

9. Procédé selon l'une quelconque des revendications 1 à 8, comprenant également :
lorsque la ressource capable de transporter le premier message existe dans la première unité de temps, l'envoi du premier message au second dispositif dans la première unité de temps.

10. Appareil configuré pour réaliser le procédé selon l'une quelconque des revendications 1 à 9.

11. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 9.
